# EUROPEAN PATENT APPLICATION

(11) **EP 4 745 857 A1**
(43) Date of publication of application: **20.05.2026**
(21) Application number: 25215752.4
(22) Date of filing: 14.11.2025
(51) Int. Cl.: G06Q 10/08, B66F 9/06, G08G 1/16

(54) **METHODS AND SYSTEMS FOR USING SENSOR DATA IN WAREHOUSE SYSTEMS**

(30) Priority: 15.11.2024 US 202463720773 P
(71) Applicant: Rapyuta Robotics Co., Ltd., Tokyo 135-0043 (JP)
(72) Inventor: Vasudevan, Praveenkumar, Tokyo 135-0043 (JP); Okamoto, Yu, Tokyo 135-0043 (JP)
(74) Representative: FRKelly

(57) **Abstract**

A method of using sensor data in a warehouse system includes: acquiring sensor data while a mobile body is in operation, the mobile body including a sensor that is able to detect an object within a detection range, the sensor data regarding the object detected by the sensor; detecting the object in, within the detection range, a second range other than a first range on the basis of the sensor data, the first range being used to perform a task of the mobile body; and determining a future task of the mobile body on the basis of the sensor data regarding the object detected in the second range.

## Description

### FIELD OF THE INVENTION

The present invention relates to a method and system of using sensor data in a warehouse system.

### BACKGROUND OF THE INVENTION

For example, a mobile body such as a forklift or a transport robot incorporates a sensor that detects a distance to an object by, for example, irradiation with a laser beam. In a known technology, a mobile body estimates a self-location in a warehouse on the basis of sensor data acquired using the sensor.

### SUMMARY OF THE INVENTION

With a recent improvement in sensor performance, unused sensor data contains a large amount of data that is effectively usable for purposes other than self-localization. The present invention is made in order to solve the above problem and an object of the present invention is to provide a method of using sensor data and a system that enable efficient use of such unused sensor data.

According to a first aspect of the present invention, a method of using sensor data in a warehouse system executable by a computer and a system are provided, and the method and system include: acquiring sensor data while a mobile body is in operation, the mobile body including a sensor that is able to detect an object within a detection range, the sensor data regarding the object detected by the sensor; detecting the object in, within the detection range, a second range other than a first range on the basis of the sensor data, the first range being used to perform a task of the mobile body; and determining a future task of the mobile body on the basis of the sensor data regarding the object detected in the second range.

The object detected in the second range includes a transported object placed at a specified location in the warehouse system.

The future task includes a task in which the mobile body transports the transported object to a destination location.

The specified location includes a location on a rack, a location on a conveyor, or a location in a temporary storage area.

The future task includes a task of the mobile body different from the mobile body from which the sensor data is outputted.

A future task of the different mobile body is determined before the future task of the mobile body is completed.

The sensor data is invalidated after the elapse of a predetermined period of time since the sensor data is acquired.

According to a second aspect of the present invention, a method of using sensor data in a warehouse system executable by a computer and a system are provided, and the method and the system include: acquiring sensor data while a mobile body is in operation, the mobile body including a sensor that is able to detect an object within a detection range, the sensor data regarding the object detected by the sensor; detecting the object in, within the detection range, a second range other than a first range on the basis of the sensor data, the first range being used to perform a task of the mobile body; and understanding a movement path of the object that is moving on the basis of the sensor data regarding the object detected in the second range.

The understood movement path of the object is utilized to determine a movement path of the mobile body different from the mobile body from which the sensor data is outputted.

The object that is moving includes a mobile body not communicably connected to the warehouse system.

The object that is moving includes a human.

The method further includes predicting, on the basis of a movement speed of the object that is moving, a future movement path of the object.

The acquiring of the sensor data is performed while the mobile body is being charged.

The sensor data is invalidated after the elapse of a predetermined period of time since the sensor data is acquired.

According to a third aspect of the present invention, a method of using sensor data in a warehouse system executable by a computer and a system are provided, and the method includes: acquiring sensor data while a mobile body is in operation, the mobile body including a sensor that is able to detect an object within a detection range, the sensor data regarding the object detected by the sensor; detecting the object in, within the detection range, a second range other than a first range on the basis of the sensor data, the first range being used to perform a task of the mobile body; and acquiring inventory information in the warehouse system on the basis of the sensor data regarding the object detected in the second range.

The object detected in the second range includes an item placed on a rack, a conveyor, or a temporary storage area.

The object detected in the second range includes another mobile body that is transporting an item, the other mobile body being different from the mobile body from which the sensor data is outputted.

The sensor data is invalidated after the elapse of a predetermined period of time since the sensor data is acquired.

According to a fourth aspect of the present invention, a warehouse system configured to execute the method according to any one of the above.

According to a fifth aspect of the present invention, a computer-readable non-transitory storage medium is provided, the storage medium containing a command configured to cause the method according to any one of the above to be executed when executed by a computer.

### BRIEF DESCRIPTION OF THE DRAWINGS

Fig. 1 is a perspective view schematically illustrating a warehouse system 100 incorporated with an autonomous mobile robot 1.
Fig. 2 is a perspective view schematically illustrating a structure of a forklift 1 according to an embodiment of the present invention.
Fig. 3 is a functional block diagram schematically illustrating a configuration of a management server 150.
Fig. 4 is a functional block diagram schematically illustrating a configuration of the forklift 1.
Fig. 5 is a diagram for explaining a scene where the forklift 1 travels.
Fig. 6A is a diagram for explaining Use Case 1 of sensor data.
Fig. 6B is a diagram for explaining Use Case 1 of sensor data.
Fig. 7 is a flowchart for explaining a flow of a process in Use Case 1.
Fig. 8 is a diagram for explaining Use Case 2 of sensor data.
Fig. 9 is a flowchart for explaining a flow of a process in Use Case 2.
Fig. 10 is a diagram for explaining Use Case 3 of sensor data.
Fig. 11 is a flowchart for explaining a flow of a process in Use Case 3.
Fig. 12 is a diagram for explaining a modification example of Use Case 3 of sensor data.
Fig. 13 is a perspective view schematically illustrating a warehouse system 200 according to another embodiment.

### DETAILED DESCRIPTION OF THE INVENTION

### 1. Outline of Warehouse System

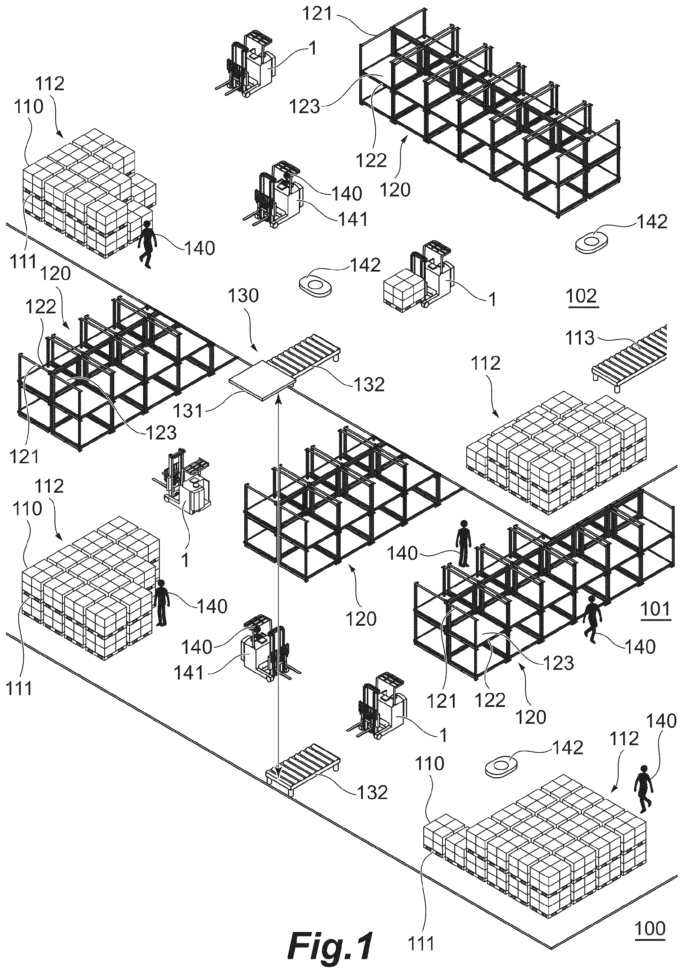

Description will be made below on an embodiment of the present invention with reference to the attached drawings. Fig. 1 is a perspective view schematically illustrating a warehouse system 100 incorporated with an autonomous mobile robot 1. An example of the warehouse system 100 is established by, for example, a plurality of floors in a building. In this example, the warehouse system 100 includes a floor on a lower level 101 and a floor on a level higher than the lower level 101, that is, an upper level 102, as illustrated in Fig. 1. A floor surface on each of the lower level 101 and the upper level 102 is provided with a travel path of the autonomous mobile robot 1. A mobile body, that is, the autonomous mobile robot 1, is, for example, a forklift 1 that is able to autonomously travel on the floor surface by self-localization on each of the lower level 101 and the upper level 102 as described later. In this example, a plurality of forklifts 1 are located on each of the lower level 101 and the upper level 102.

In the warehouse system 100, a temporary storage area 112 is defined in a predetermined region in the floor surface on each of the lower level 101 and the upper level 102, a pallet 111 is to be temporarily placed at the temporary storage area 112, and one or more cardboard boxes 110 containing a large number of the same or different items are loaded on a surface of the pallet 111. In this example, the pallet 111 is placed directly on the floor surface. A plurality of temporary storage areas 112 may be defined on the floor surface. On the cardboard boxes 110 loaded on the pallet 111 in the temporary storage area 112, for example, another one or more pallets 111 loaded with one or more cardboard boxes 110 are further stacked in two tiers. It should be noted that the pallet 111 is formed in the shape of, for example, a rectangular plate or square plate in plan view. The pallet 111 has four side surfaces connecting the front surface and a back surface facing away from each other, and the four side surfaces are each provided with a pair of insertion slots for insertion of a fork of the forklift 1. It should be noted that the cardboard box 110 and the pallet 111 constitute a transported object according to the present invention.

The warehouse system 100 includes a rack 120 located on the floor surface of the lower level 101 and the upper level 102. The rack 120 is, for example, a storage shelf for storing the above-described one or more cardboard boxes 110 in a state of being loaded on the pallet 111. The rack 120 is a storage shelf for storing the items on the pallet 111. The rack 120 includes, for example, a plurality of rack units 122 made of a metal frame member 121. The rack 120 is formed by stacking the plurality of rack units 122 in a height direction while joining adjacent ones of the rack units 122 in a width direction and a length direction to each other, and the width direction and the length direction are parallel with the floor surface. In this case, the rack units 122 in two tiers are joined to each other in the height direction and the width direction, while a plurality of rack units 122 are joined to each other in the length direction.

Each of the rack units 122 defines one accommodating space 123 that accommodates the pallet 111 loaded with the one or more cardboard boxes 110. The fork of the forklift 1 is able to access the accommodating space 123 from a side surface of the rack 120. Thus, the forklift 1 is able to load the pallet 111 into the accommodating space 123 from the side surface of the rack 120 and unload the pallet 111 out of the accommodating space 123 from the side surface of the rack 120. It should be noted that the numbers of the rack units 122 forming the above-described rack 120 in the height direction and the length direction are merely by way of examples and any other number of the rack units 122 may be joined to each other to form the rack 120. Moreover, the rack 120 may be a usual rack 120 having the accommodating space 123 that accommodates a plurality of pallets 111 in place of the rack formed by combining the plurality of rack units 122, each of which defines the single accommodating space 123.

The warehouse system 100 includes a vertical transport device 130, and the vertical transport device 130 is able to transport the pallet 111 loaded with the one or more cardboard boxes 110 between the lower level 101 and the upper level 102. It should be noted that the vertical transport device 130 is also able to transport the pallet 111 only. Moreover, the vertical transport device 130 may transport, for example, a metal mesh pallet in place of the pallet 111. The vertical transport device 130 includes a transport mechanism 131 that is movable up and down in a vertical transport space and a conveyor 132 extending to the transport mechanism 131 on each of the lower level 101 and the upper level 102. For example, the conveyor 132 is able to transport the pallet 111 having been transported to the conveyor 132 by the forklift 1 to the transport mechanism 131, and transport the pallet 111 having been transported by the transport mechanism 131 to the front of the forklift 1. The transport mechanism 131 is able to transport the pallet 111 having been transported by the conveyor 132 from the lower level 101 to the upper level 102 or from the upper level 102 to the lower level 101.

In the warehouse system 100, a human worker 140, a manned (that is, driven by the human worker 140) forklift 141, and another mobile body such as another transport robot 142 exist on the lower level 101 and the upper level 102. The worker 140 performs a variety of works, such as transporting the cardboard box 110, placing the cardboard box 110 onto the pallet 111, and handling an abnormality in the forklift 1, on the lower level 101 and the upper level 102. The manned forklift 141 and the transport robot 142 are mobile bodies not communicably connected to, for example, a later-described management server of the warehouse system 100. The operations of these manned forklift 141 and transport robot 142 may be controlled by, for example, a server or the like owned by a manager which is different from that of the management server of the warehouse system 100. In addition, the manned forklift 141 and the transport robot 142 could be mobile bodies communicably connected to the management server of the warehouse system 100. Moreover, a conveyor 113 may further be located in the warehouse system 100, and the conveyor 113 is able to transport the cardboard box 110 to, for example, the temporary storage area 112.

In a plan view of the floor surfaces of the lower level 101 and the upper level 102, a region other than a region in which the temporary storage area 112 is defined and a region in which the rack 120 is located is defined as a movement path for the forklift 1, the manned forklift 141, and the other transport robot 142. Note that a predetermined region around the temporary storage area 112 and a predetermined region around the rack 120 are defined as a buffer region in which the entry of the forklift 1 is restricted as described later. Note that in a case where the forklift 1 enters the temporary storage area 112 or in a case where the forklift 1 performs loading/unloading the pallet 111 with respect to the rack 120, the buffer region is temporarily cancelled. Moreover, the human worker 140 is able to freely move on the floor on the lower level 101 or the upper level 102 without such a restriction regarding the buffer region.

### 2. Configuration of Forklift

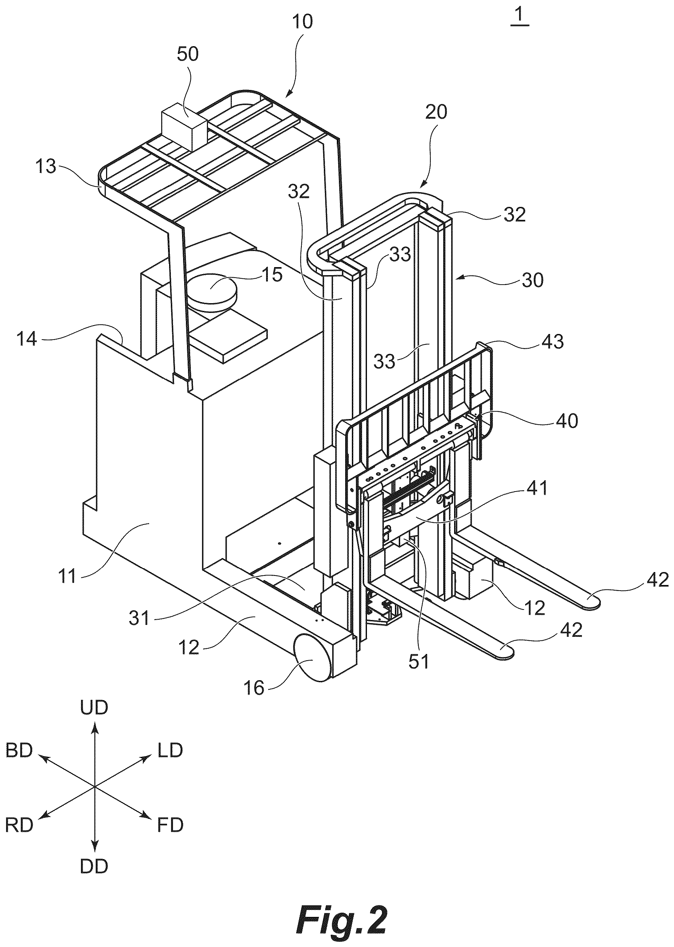

Fig. 2 is a perspective view schematically illustrating a structure of the forklift 1 according to an embodiment of the present invention. The forklift 1 is used for transporting an item 110 loaded on the pallet 111 to a variety of locations in the warehouse system 100. It should be noted that the forklift 1 is also able to transport the cardboard box 110 accommodating the item 110. In principle, the forklift 1 is able to autonomously travel on the basis of self-localization within the warehouse system 100 as described above. Note that the forklift 1 is also able to be manually driven by the human worker 140.

It should be noted that as for a front-back direction of the forklift 1, a direction toward a front side of the forklift 1 is defined as a forward direction FD, whereas a direction toward a back side of the forklift 1 opposite to the forward direction FD is defined as a backward direction BD hereinbelow. Likewise, as for a height direction of the forklift 1, a direction toward an upper side of the forklift 1 is defined as an upward direction UD, whereas a direction toward a lower direction of the forklift 1 opposite to the upward direction UD is defined as a downward direction DD. Further, as for a left-right direction of the forklift 1, a direction toward a left side of the forklift 1 is defined as a leftward direction LD, whereas a direction toward a right side of the forklift 1 is defined as a rightward direction RD.

The forklift 1 includes a vehicle body 10 and a cargo handling assembly 20 located in a front end of the vehicle body 10. The vehicle body 10 includes a main body 11, a pair of straddle legs 12, 12 extending in parallel with each other from the front end of the main body 11 in the forward direction FD, and a head guard 13 attached to an upper end of the main body 11. For example, the main body 11 includes, in a rear end thereof, a driver's cab 14 on which the worker 140 can stand and, on an upper surface thereof, an operation unit 15 for the worker 140 to operate the forklift 1. The cargo handling assembly 20 is located between the straddle legs 12, 12. The head guard 13 prevents a package or an object from falling off toward the operator from above.

The vehicle body 10 includes a pair of front wheels 16 located on lower portions of the respective straddle legs 12, 12 and, for example, one rear wheel (not illustrated) located on a lower portion of the main body 11. The rear wheel is connected to, for example, a drive motor (not illustrated) incorporated in the main body 11. An electric power is to be supplied to the drive motor from, for example, a battery (not illustrated) likewise incorporated in the main body 11. That is to say, the rear wheel is a drive wheel, whereas the front wheels 16 are idler wheels. The rear wheel is located with an offset in, for example, the leftward direction FD from a center in the left-right direction of the forklift 1. The forklift 1 is allowed to move forward, backward, left, and right by driving the rear wheel in a travel direction with a change in angle in the left-right direction. It should be noted that in transporting the pallet 111, the forklift 1 travels toward the backward direction BD.

The cargo handling assembly 20 is an assembly that is able to lift and lower the pallet 111. The cargo handling assembly 20 includes a mast assembly 30 and a fork assembly 40. The mast assembly 30 is supported between the pair of straddle legs 12, 12 movably in the forward direction FD and the backward direction BD. The fork assembly 40 is supported on a front end of the mast assembly 30 movably in the upward direction UD and the downward direction DD. It should be noted that in a state illustrated in Fig. 1, the mast assembly 30 is positioned at the most advanced position in the forward direction FD. Moreover, the fork assembly 40 is positioned at an elevated position in the upward direction UD from the lowest position.

The mast assembly 30 includes a base 31 located between the pair of straddle legs 12, 12, a pair of outer masts 32, 32 standing upright in the upward direction UD from the base 31, and a pair of inner masts 33, 33 located on inner sides in the leftward direction LD and the rightward direction RD of the pair of respective outer masts 32, 32. The outer masts 32, 32 are integrally formed with, for example, a front end of the base 31. The outer masts 32, 32 are spaced from each other at a predetermined distance in the left-right direction. The base 31, the outer masts 32, 32, and the inner masts 33, 33 are supported between the pair of straddle legs 12, 12 movably in the forward direction FD and the backward direction BD.

The inner masts 33, 33 are adjacent to the inner sides in the left-right direction of the respective outer masts 32, 32 and stand upright in the heigh direction. The inner masts 33, 33 are supported by the outer masts 32, 32 movably in the height direction with respect to the outer masts 32, 32. The fork assembly 40 is supported by the inner masts 33, 33 movably in the height direction with respect to the inner masts 33, 33. It should be noted that as being supported by the outer masts 32 via the respective inner masts 33, 33, the fork assembly 40 is allowed to move in the forward direction FD and the backward direction BD along with a bracket 41, the outer masts 32, and the inner masts 33.

The fork assembly 40 includes the bracket 41, a pair of forks 42, 42, a backrest 43. The bracket 41 is supported by the inner masts 33, 33 movably in the height direction with respect to the inner masts 33, 33. The pair of forks 42, 42 are attached to a front surface of the bracket 41. The pair of forks 42, 42 each extend in the forward direction FD from the bracket 41 at, for example, a position in the left-right direction where one of the outer masts 32 and one of the inner masts 33 are located. The backrest 43 is attached to, for example, an upper end of the bracket 41. The backrest 43 prevents a package on the pallet lifted by the forks 42 from falling behind the fork assembly 40. It should be noted that a fork assembly including a pair of clamps instead of the pair of forks 42, 42 may be incorporated in the forklift 1, and the pair of clamps sandwich the cardboard box 110 or the like from opposite sides.

The forklift 1 includes a first ranging sensor 50 and a second ranging sensor 51 in this example. The first ranging sensor 50 and the second ranging sensor 51 are 3D LiDAR (optical detection and ranging) sensors capable of detecting the presence/absence of an object within a predetermined three-dimensional detection range. Specifically, the first ranging sensor 50 and the second ranging sensor 51 acquire 3D point cloud data (sensor data) regarding an object within the detection range by irradiating the detection range with a laser beam. The 3D point cloud data is a set of points having three-dimensional coordinates within the three-dimensional detection range. The 3D point cloud data includes the coordinates and color information regarding each point and the presence/absence of an object within the detection range is detected by measuring a distance from the ranging sensor 50 to each point.

For example, the first ranging sensor 50 is attached on, for example, the head guard 13 and along a rear end of the head guard 13. The first ranging sensor 50 is oriented substantially to the backward direction BD. The second ranging sensor 51 is attached to, for example, a lower end of the bracket 41. The second ranging sensor 51 is oriented substantially to the forward direction FD. In this example, irradiation ranges of laser beams from the first ranging sensor 50 and the second ranging sensor 51 are set to 360 degrees in a horizontal direction around the respective first ranging sensor 50 and second ranging sensor 51, 60 degrees in respective height directions, and 70 m from the respective first ranging sensor 50 and second ranging sensor 51. Note that a blind spot is formed over a predetermined range in the detection range of each of the first ranging sensor 50 and the second ranging sensor 51 by the forklift 1. Moreover, the detection ranges of the first ranging sensor 50 and the second ranging sensor 51 overlap.

It should be noted that the forklift 1 may further include, for example, three additional ranging sensors (not illustrated) that detect the presence/absence of an object in a detection range in the forward direction FD and the rightward direction RD, a detection range in the forward direction FD and the leftward direction LD, and a detection range in the backward direction BD. These additional ranging sensors are, for example, 2D LiDAR sensors. For example, one of the additional ranging sensors may be attached to a front end of each of the straddle legs 12 and the other one of the ranging sensors may be attached at a position at a lower rear end of the main body 11. These three additional ranging sensors are located at the same level from the floor surface. These additional ranging sensors enable detecting the presence/absence of an object in the two-dimensional detection range over 360 degrees in the horizontal direction at the level of the additional ranging sensors. These additional ranging sensors may be used to generate a two-dimensional map of an arrangement layout of the temporary storage area 112 and the rack 120 by mapping the lower level 101 and the upper level 102 of the warehouse system 100.

### 3. Configuration of Management Server

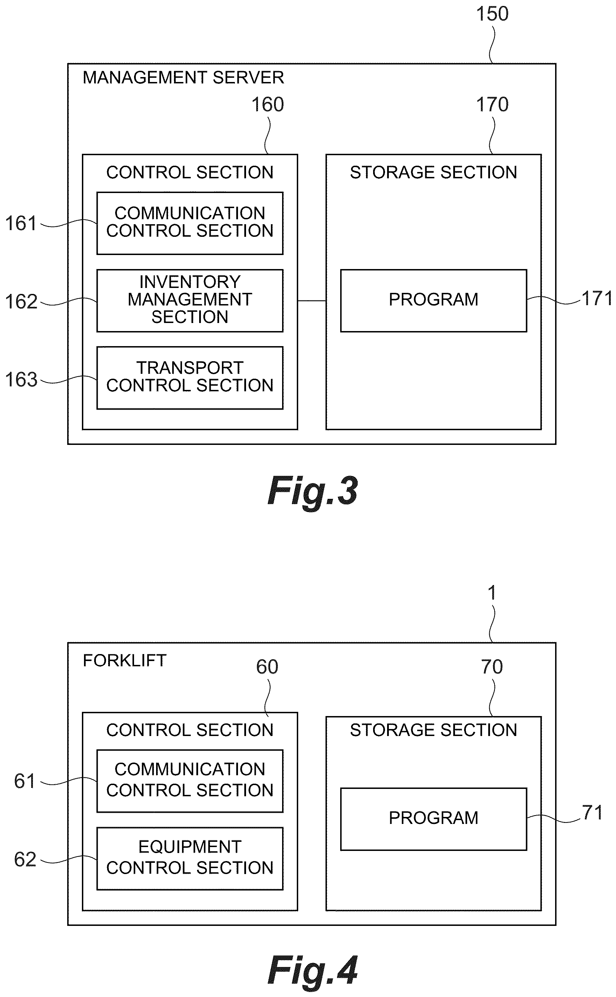

As illustrated in Fig. 3, the warehouse system 100 includes a management server 150 that manages motions of the forklift 1 related to receiving, storing, and shipping of items, a storage status of items in the temporary storage area 112 and the rack 120, and the like. The management is achieved by a control section (a computer) executing a program stored in a storage section as described later. Specifically, these processes are to be performed in accordance with information processing described in the program. That is to say, when the program is read by the control section, the information processing described in the program functions as a specific means of a combination of software related to the program and a variety of hardware resources of the warehouse system 100. Such a program may be stored in a computer-readable non-transitory storage medium.

The management server 150 includes a control section 160 and a storage section 170. The control section 160 includes a communication control section 161, an inventory management section 162, a transport control section 163. The storage section 170 stores a program 171 for controlling a process related to receiving, storing, and shipping of items of the warehouse system 100. The storage section 170 stores, in addition to the program 171, information regarding items stored in the temporary storage area 112 and the rack 120 (for example, information for managing which items are stored in which locations, etc.), a two-dimensional map showing an arrangement layout of the temporary storage area 112 and the rack 120 in the warehouse system 100, and the like. The control section 160 manages the warehouse system 100 by executing the program 171 stored in the storage section 170. The management server 150 may be implemented by, for example, a physical server installed in a building where the warehouse system 100 is established or may be implemented by, for example, a cloud server built on the Internet.

The communication control section 161 controls communication between the management server 150 and the forklift 1. A communication scheme may be, for example, Wi-Fi (registered trademark), Bluetooth (registered trademark), or the like. The inventory management section 162 manages an inventory status of the warehouse system 100. Specifically, the inventory management section 162 manages information for identifying each item (SKU), information regarding the inventory quantity of the item identified by SKU, information (ID) for identifying a location where that item is stored, and the like in association with each other. The transport control section 163 manages and controls the motions of the forklift 1. Specifically, the transport control section 163 generates transport instructions for the forklift 1 indicating the item to be transported from one location to another location in the warehouse system 100.

Now, the generation of the transport instructions by the transport control section 163 is specifically described. The transport control section 163 generates the transport instructions for the predetermined forklift 1 for each process for receiving or shipping in the warehouse system 100. A command for transport of an item merely on the lower level 101 or the upper level 102 is as follows. In this case, the transport instructions contain, for example, a) a first movement path from a current location of the forklift 1 to the designated pallet 111, b) a command regarding a picking motion to pick up the designated pallet 111, c) a second movement path to a designated location to which the designated pallet 111 is to be transported, and d) a command regarding a dropping motion to drop off the designated pallet 111 at the designated location.

In contrast, transport instructions for transport from the lower level 101 to the upper level 102 or from the upper level 102 to the lower level 101 are as follows. Specifically, the transport instructions contain first transport instructions for the forklift 1 located on one of the levels and second transport instructions for the forklift 1 located on the other level. The first transport instructions contain a) a first movement path from the current location of the forklift 1 to the designated pallet 111, b) a command regarding a picking motion to pick up the designated pallet 111, c) a second movement path to the conveyor 132 of the vertical transport device 130, and d) a command regarding a dropping motion to drop off the designated pallet 111 onto the conveyor 132.

In contrast, the second transport instructions contain a) a first movement path from the current location of the forklift 1 to the conveyor 132 of the vertical transport device 130, b) a command regarding a picking motion to pick up the designated pallet 111, c) a second movement path to a designated location to which the designated pallet 111 is to be transported, and d) a command regarding a dropping motion to drop off the designated pallet 111 at the designated location. As seen from the above, for transport instructions for transport from the lower level 101 to the upper level 102 or transport instructions for transport from upper level 102 to the lower level 101, different transport instructions are to be sent to the respective forklifts 1. It should be noted that the first movement path and the second movement path are not necessarily the shortest paths and may be schematic paths where the forklift 1 is movable on the map of the warehouse system 100.

### 4. Control System of Forklift

Fig. 4 is a functional block diagram schematically illustrating the configuration of the forklift 1. The forklift 1 includes a control section 60 and a storage section 70. The control section 60 includes a communication control section 61 and an equipment control section 62. The storage section 70 stores a program 71 for controlling the motions of the forklift 1. The storage section 70 stores a two-dimensional map showing the arrangement layout of the temporary storage area 112 and the rack 120 in the warehouse system 100, and the like in addition to the program 71. It should be noted that the map is shared by the management server 150. As described above, for example, the forklift 1 performs mapping of the lower level 101 and the upper level 102 using the ranging (2D LiDAR) sensors to generate the map. The control section 60 controls the motions of the forklift 1 by executing the program 71 stored in the storage section 70.

The communication control section 61 controls communication between the management server 150 and the forklift 1. The equipment control section 62 controls the motions of the forklift 1. Specifically, the equipment control section 61 is able to control a forward movement, a backward movement, and left and right turning of the forklift 1 based on the driving of the rear wheel and the motions related to picking and dropping the pallet 111 based on the driving of the mast assembly 30 and the fork assembly 40 of the cargo handling assembly 20. Moreover, the equipment control section 61 further manages, during the travel of the forklift 1 on the lower level 101 and the upper level 102, a travel permitted region where the travel of the forklift 1 is permitted and a travel prohibited region where the travel of the forklift 1 is not permitted.

### 5. Operation of Forklift

Next, description will be made on a scene where the forklift 1 is in operation in the warehouse system 1. The "forklift 1 is in operation" refers to a state where the forklift 1 is powered on. The state where the forklift 1 is powered on includes, for example, when the forklift 1 is performing the picking motion or the dropping motion for the pallet 111, traveling, turning, stopped, charged, or the like. While the forklift 1 is in operation, the first ranging sensor 50 and the second ranging sensor 51 irradiate the own respective detection ranges with a laser beam to acquire three-dimensional point cloud data (sensor data) regarding an object within the detection ranges. The acquirement of the sensor data is performed at, for example, 0.1-second intervals. The sensor data is stored in the storage section 70 of the forklift 1 and processed by the control section 60. Alternatively, the sensor data may be stored in the storage section 170 of the management server 150 via the communication control section 61 and processed by the control section 160.

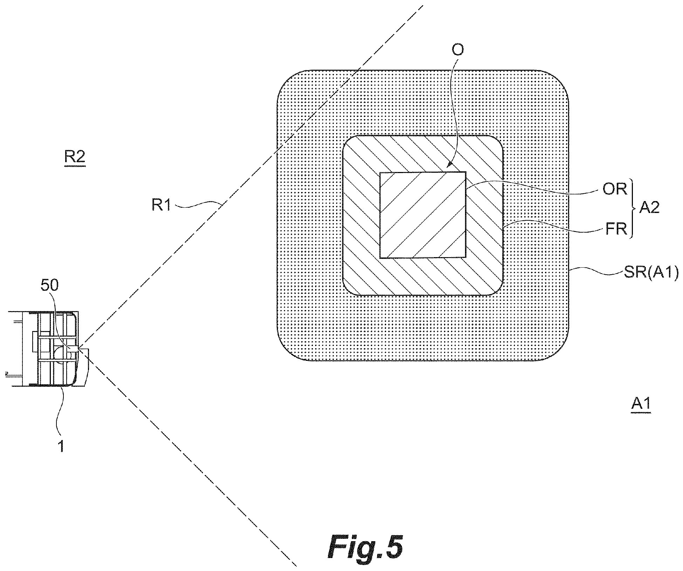

Fig. 5 is a diagram for explaining a scene where the forklift 1 is traveling. In an example illustrated in Fig. 5, the forklift 1 moves, that is, travels, toward the backward direction BD at, for example, a speed of 1.4 meters per second. It should be noted that the detection ranges of the first ranging sensor 50 and the second ranging sensor 51 widely stretch over 360 degrees around the forklift 1 and the illustration thereof is omitted, accordingly. Meanwhile, during the travel of the forklift 1, the first ranging sensor 50 irradiates, within the detection range, a first range R1 with a laser beam to acquire 3D point cloud data of an object. In this example, for example, a predetermined angular range (for example, 90 degrees, approximately) in the horizontal direction in the backward direction BD from the forklift 1 is defined as the first range R1. The range other than the first range R1 is defined as a second range R2. The second range R2 also includes the detection range of the second ranging sensor 51.

Assume a scene where an object O is detected in the first range R. The object O is, for example, an immobile object, that is, for example, a pillar in the warehouse system 100. The pillar stands upright in the form of, for example, a rectangular pillar from the floor. During the travel of the forklift 1, the first ranging sensor 50 acquires 3D point cloud data (sensor data) at 0.1-second intervals. The object O is detected in the first range R1 on the basis of each sensor data. The object O is represented as an object region OR in the sensor data, and the object region OR is in a two-dimensional shape in conformity with the object O. However, the object region OR is actually identified in a three-dimensional shape. Moreover, a range defined at a constant distance around a contour of the object region OR is set as a first region (a buffer region) FR and a range defined at a constant distance around the first region FR is set as a second region SR.

In this example, the object region OR in conformity with the contour of the object O and the first region FR outside the object region OR are designated as the travel prohibited region A2. In contrast, the second region SR is designated as the travel permitted region where the forklift 1 is allowed to travel but also designated as a region where deceleration of the forklift 1 is required. Moreover, in the first range R1, a region outside the second region SR is also designated as the travel permitted region A1. It should be noted that in this example, the first region FR and the second region SR are closed regions. In this manner, the sensor data acquired at, for example, 0.1-second intervals is subjected to a process to detect the object O. It should be noted that the travel permitted region A1 after the elapse of a predetermined threshold time is designated as the travel prohibited region A2 where the travel of the forklift 1 is not permitted.

The designation of the travel permitted region A1 and the travel prohibited region A2 for each sensor data is completed, for example, before the next sensor data is acquired. The travel permitted region A1 and the travel prohibited region A2 thus designated are superimposed on the map owned by the forklift 1 and generated as a cost map. Moreover, the cost map may be sent to the management server 150 and stored in the storage section 170 of the management server 150. Moreover, the cost map may be shared by another forklift 1 via the management server 150. The travel permitted region A1 and the travel prohibited region A2 designated by the forklift 1 are thus also applicable to the other forklift 1. It should be noted that the object O includes, in addition to the pillar, the cardboard box 110 or the pallet 111 placed on the floor and any other object that may be an obstacle.

### 6. Method of Using Sensor Data - 6.1 Use Case 1

Description will be made on, as Use Case 1 of a method of using sensor data, a case where a future task of the forklift 1 is to be determined on the basis of the sensor data acquired while the forklift 1 is in operation. Specifically, the future task of the forklift 1 is to be determined on the basis of, within the sensor data, information regarding an object detected in the second range R2. Although description is made on, as when the forklift 1 is in operation, when the forklift 1 is traveling in the above-described example, when the forklift 1 is in operation includes when any other motion, such as the picking motion, the dropping motion, or charging, is being performed. For example, when a task of the forklift 1, such as the picking motion or the dropping motion, is being performed, a predetermined angular range in a predetermined direction from the first ranging sensor 50 or the second ranging sensor 51 is defined as the first range R1. A dimension of the angular range may be set to an appropriate range in accordance with the content of the task.

It should be noted that the task of the forklift 1 includes, for example, the picking motion and a transporting motion for the cardboard box 110 or the pallet 111, the dropping motion, a charging motion, and the like. Moreover, the object detected in the second range R2 within the detection range includes, for example, a non-moving object and a moving object within the warehouse system 100. The non-moving object includes, for example, the rack 120, the pallet 111, the cardboard box 110, the conveyor 113, the vertical transport device 130, and the like. The moving object includes, for example, another forklift 1, the human worker 140, the manned forklift 141, another transport robot 142, the pallet 111 or the cardboard box 110 that is being moved on the conveyor 113, and the like.

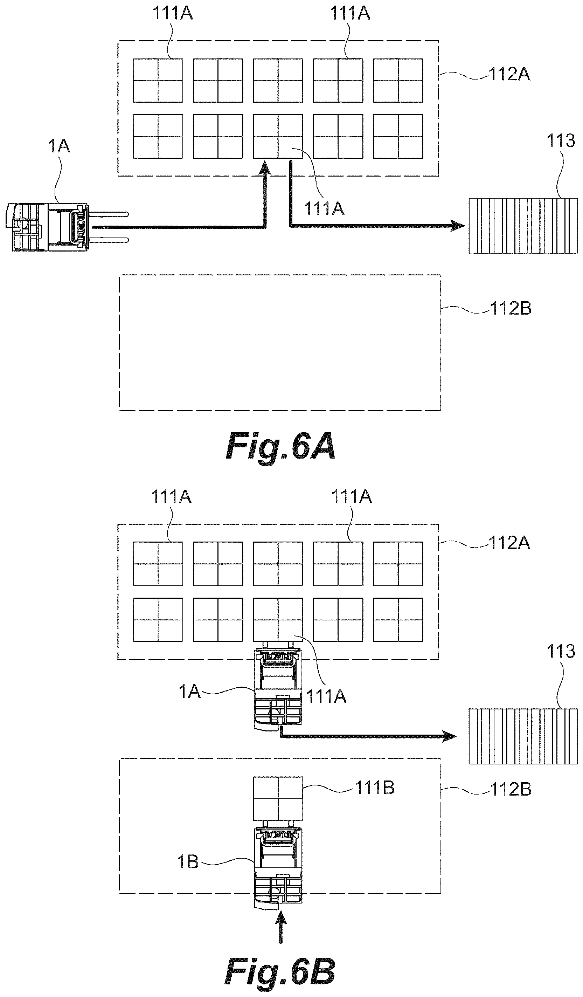

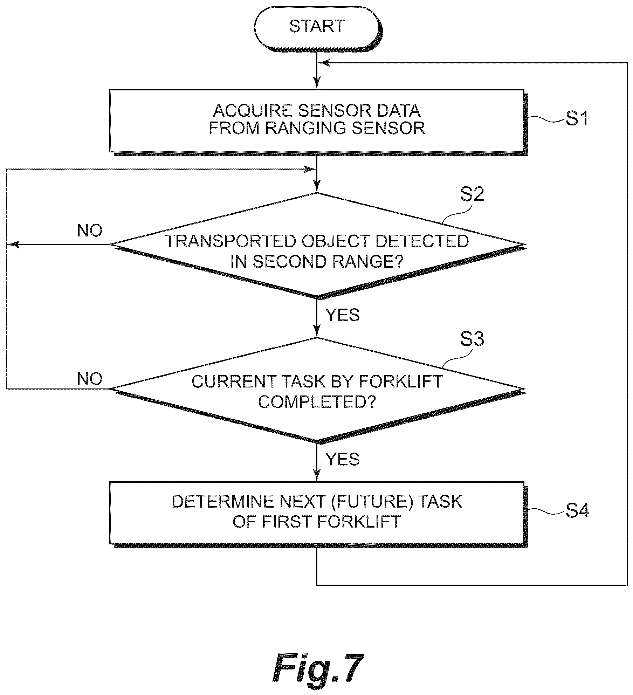

Fig. 6A and Fig. 6B are diagrams for explaining Use Case 1 of sensor data. Fig. 7 is a flowchart for explaining a flow of a process in Use Case 1. Herein, description will be made on a case where the control section 60 of the forklift 1 performs processes. However, alternatively, the control section 160 of the management server 150 may perform similar processes. This example represents a scene where a first forklift 1A performs a transport task for the pallet 111 (the cardboard box 110). The first forklift 1A has received transport instructions regarding a task to transport all the pallets 111 (111A) placed in the specified location, that is, a first temporary storage area 112A and a second temporary storage area 112B, to a destination location, that is, the conveyor 113. The first forklift 1A has also received transport instructions to preferentially transport the pallet 111 (111B) from the second temporary storage area 112B to the conveyor 113. In a state illustrated in Fig. 6A, a plurality of pallets 111A are placed in the first temporary storage area 112A, whereas no pallet 111A is placed in the second temporary storage area 112B.

As illustrated in Fig. 6B, while the first forklift 1A is performing a task such as the picking motion, the control section 60 acquires sensor data from the first ranging sensor 50 and the second ranging sensor 51 (Step S1 in Fig. 7). Here, for example, the pallets 111A are detected in the first range R1 within the detection range of the second ranging sensor 51, and the pallets 111A are objects to be transported. The first forklift 1A thus performs the picking motion for the pallets 111A in the first temporary storage area 112A. At this time, for example, another second forklift 1B transports a pallet 111B to the second temporary storage area 112B, and the pallet 111B is a transported object. During the picking motion for the pallet 111A in the first temporary storage area 112A, the first ranging sensor 50 of the first forklift 1A detects, in the second range R2 defined in the backward direction BD of the first forklift 1A, the fact that the pallet 111B is placed in the second temporary storage area 112B.

The control section 60 detects the pallet 111B in the second range R2 on the basis of the sensor data of the first ranging sensor 50 (Step S2 in Fig. 7, YES). In response to the pallet 111B being detected in the second range R2 in this manner, the control section 60 monitors whether or not the first forklift 1A has completed the current transport task for the pallets 111A (Step S3 in Fig. 7). The completion of the current transport task is determined on the basis of, for example, the sensor data of the second ranging sensor 51. In a case where the task has not been completed (Step S3 in Fig. 7, NO) or a case where no transported object, that is, no pallet 111B, is detected in the second range R2 (Step S2 in Fig. 7, NO), the process of the control section 60 is again repeated from Step S2. The process from Step S1 to Step S3 is repeated with respect to the sensor data acquired at, for example, 0.1-second intervals.

After that, the first forklift 1A transports the pallet 111A from the first temporary storage area 112A to the conveyor 113. During this transporting motion, the first forklift 1A also continuously detects, in the second range R2, the pallet 111B in the second temporary storage area 112 using the first ranging sensor 50 and the second ranging sensor 51 (Step S2 in Fig. 7, YES). After that, the first forklift 1A performs the dropping motion to drop the pallet 111A onto the conveyor 113. During this dropping motion, the first forklift 1A also continuously detects, in the second range R2, the pallet 111B in the second temporary storage area 112 using the first ranging sensor 50 and the second ranging sensor 51 (Step S2 in Fig. 7, YES).

In response to the control section 60 detecting the completion of the dropping motion of the first forklift 1A to drop off the pallet 111A onto the conveyor 113, that is, the current transport task, (Step S3 in Fig. 7, YES), the process proceeds to Step S4. In Step S4, the control section 60 determines, as the next (future) task of the first forklift 1A, a task to transport the pallet 111B from the second temporary storage area 112B to the conveyor 113. Specifically, new transport instructions to the first forklift 1A are generated on the basis of the sensor data from the first ranging sensor 50 and the second ranging sensor 51. The transport instructions include a first movement path from the conveyor 113 to the pallet 111B, a picking motion to pick up the pallet 111B, a second movement path from the pallet 111B to the conveyor 113, and a command regarding a dropping motion to drop off the pallet 111 onto the conveyor 113.

The first forklift 1A then begins a transport work for the pallet 111B in the second temporary storage area 112B in accordance with the determined task, that is, the newly generated transport instructions. Specifically, after traveling toward the second temporary storage area 112B from the conveyor 113, the first forklift 1A performs the picking motion for the pallet 111B. After the picking motion, the transporting motion and the dropping motion for the pallet 111B are performed. Even during such a picking motion, a transporting motion, and a dropping motion, the first ranging sensor 50 and the second ranging sensor 51 continuously acquire sensor data. That is to say, the process from Step S1 to Step S4 in Fig. 7 is repeated. As seen from the above, by using the sensor data detected in the second range R2 other than the first range R1 used for performing the current task, a future task of the forklift 1A is determined. As a result, it is possible to efficiently utilize sensor data that is not used for performing the current task. In another embodiment, the second forklift 1B that transported the pallet 111B can be utilized for other tasks instead of waiting for the first forklift 1A to complete the current task (dropping the pallet 111A on to the conveyor 113) and future tasks (picking the pallet 111B from the second temporary storage area 112B and dropping the pallet 111B to the conveyor 113).

In Use Case 1 described above, description is made on the example where the pallets 111A, 111B are to be transported from the first temporary storage area 112A and the second temporary storage area 112B to the conveyor 113. However, the task of the forklift 1 may include a picking motion or a dropping motion relative to not only a location on the temporary storage area 112 but also, for example, a location on the rack 120, a location on the vertical transport device 130, or a location on the conveyor 113. Further, Use Case 1 may be applied to a truck arrival area outside the warehouse system 100. It should be noted that for example, the sensor data regarding the second temporary storage area 112B may be invalidated after the elapse of a predetermined period of time. The predetermined period of time includes, for example, a predetermined period of time after acquisition of the sensor data regarding the second temporary storage area 112B stops.

In another embodiment, a future task of not the first forklift 1A but another forklift 1 (including the second forklift 1B) different from the first forklift 1A may be determined on the basis of the sensor data acquired from the first ranging sensor 50 and the second ranging sensor 51. Specifically, in a case where the pallet 111 that is a target for the picking motion is detected at, for example, an end portion of the conveyor 113 while, for example, the first forklift 1A is performing some task, a task in which the other second forklift 1B different from the first forklift 1A picks up and transports the pallet 111 that is the target for the picking motion may be determined before the task of the first forklift 1A is completed. Moreover, the same may apply to a case where an item that is a transported object is placed not on the conveyor 113 but, for example, in a cage cart for transporting a transported object. Moreover, a future task may be assigned to not another different forklift 1 but, for example, the human worker 140.

### 6.2 Use Case 2

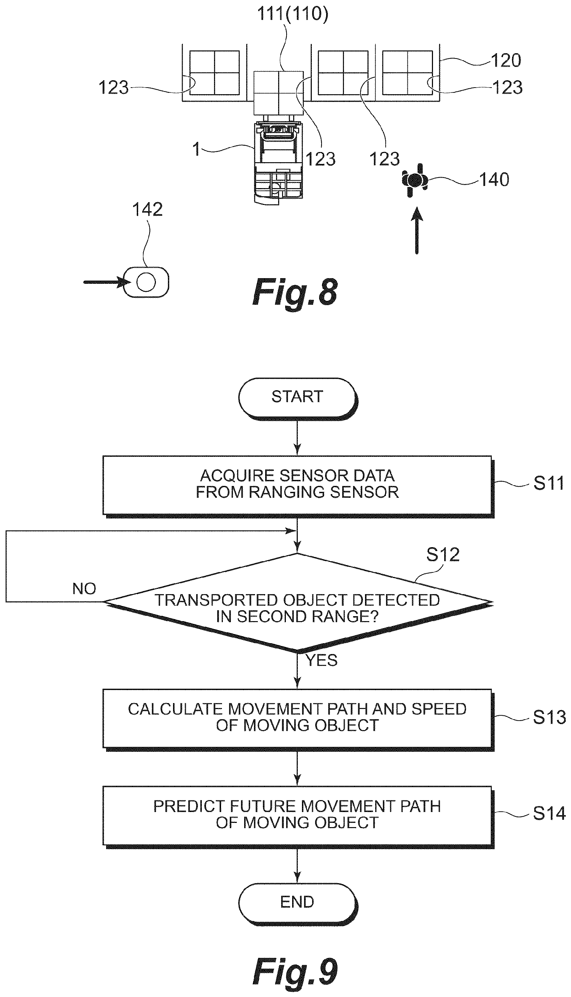

Next, description will be made on, as Use Case 2, a case where a movement path of a moving object is to be understood on the basis of sensor data acquired while the forklift 1 is in operation. Specifically, on the basis of, within the sensor data, information regarding an object detected in the second range R2, the movement path of the object is to be understood. Fig. 8 is a diagram for explaining Use Case 2 of sensor data. Fig. 9 is a flowchart for explaining a flow of a process in Use Case 2. This example represents a scene where the forklift 1 performs a dropping motion for the pallet 111. Assume a case where while performing, for example, a dropping motion to drop off the pallet 111 onto the rack 120, the forklift 1 detects objects moving in the second range R2 as illustrated in Fig. 8. In this case, the moving objects are the human worker 140 and another transport robot 142, and the human worker 140 and the other transport robot 142 are not communicably connected to the management server 150 of the warehouse system 100.

The control section 60 of the forklift 1 acquires sensor data from the first ranging sensor 50 and the second ranging sensor 51 as in Use Case 1 described above (Step S11 in Fig. 9). The forklift 1 has received instructions to drop off the pallet 111 onto the specified accommodating space 123 of the rack 120. During the dropping motion for the pallet 111, the forklift 1 detects the accommodating space 123 of the rack 120 in, for example, the first range R1 within the detection range of the second ranging sensor 51. The forklift 1 thus drops off the pallet 111 into the accommodating space 123 of the rack 120. At this time, the control section 60 detects the moving objects, that is, the human worker 140 and another transport robot 142, in, for example, the second range R2 of the sensor data acquired from the first ranging sensor 50 and the second ranging sensor 51 of the forklift 1 (Step S12 in Fig. 9, YES). In contrast, in a case where no moving object is detected (Step S12 in Fig. 9, NO), the process in Step S12 is repeated.

During the dropping motion of the forklift 1, the control section 60 calculates movement paths and movement speeds of the moving human worker 140 and other transport robot 142 on the basis of the sensor data acquired from the first ranging sensor 50 (Step S13 in Fig. 9). The control section 60 predicts subsequent future movement paths of the worker 140 and the transport robot 142 on the basis of the calculated movement paths and movement speeds (Step S14 in Fig. 9). The predicted future movement paths are sent from the forklift 1 to, for example, the management server 150. The management server 150 may use the sent information regarding the future movement paths to set a movement path of another forklift 1 different from that forklift 1. Instructions regarding transport along an optimal movement path is thus allowed to be sent to the other forklift 1. As a result, it is possible to efficiently use the sensor data. It should be noted that for example, the sensor data may be invalidated after the elapse of a predetermined period of time. Moreover, the sensor data may be sent from the forklift 1 to the management server 150 so that the management server 150 predicts the future movement paths of the worker 140 and the transport robot 142.

In Use Case 2, the human worker 140 and another transport robot 142 are not communicably connected to the management server 150 of the warehouse system 100. Consequently, the management server 150 is not allowed to directly acquire, from the worker 140 and the transport robot 142, information regarding the locations, speeds, movement paths, etc. thereof. However, in Use Case 2, the current movement paths of the worker 140 and the transport robot 142 are understood on the basis of the sensor data from the forklift 1, which makes it possible to predict the future movement paths. Consequently, for example, in the warehouse system 100, a location of a moving object is easily understandable even in a case where, for example, there is a manager who manages another warehouse system including a plurality of mobile bodies that are to be controlled by a different control system. It is possible to easily and promptly deploy the warehouse system 100 without the necessity for a complicated cooperative work performed between the manager of the warehouse system 100 and the manager of the other warehouse system.

### 6.3 Use Case 3

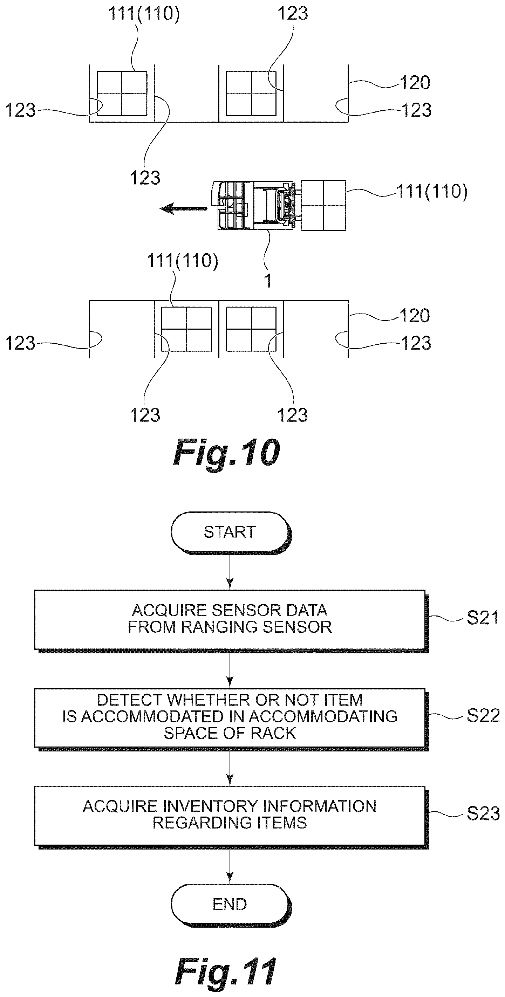

Next, description will be made on, as Use Case 3, a case where, for example, inventory information regarding items in the warehouse system 100 is to be acquired on the basis of sensor data acquired while the forklift 1 is in operation. Fig. 10 is a diagram for explaining Use Case 3 of sensor data. Moreover, Fig. 11 is a flowchart for explaining a flow of a process in Use Case 3. This example represents a scene where the forklift 1 performs a transporting motion for the pallet 111. One forklift 1 is transporting the pallet 111 through a path between, for example, a pair of racks 120, 120 in accordance with instructions to transport the pallet 111 to a destination location. The forklift 1 is advancing in, for example, the backward direction BD. At this time, the control section 160 of the management server 150 has acquired sensor data regarding an object in the first range R1 from the first ranging sensor 50 for the sake of a traveling motion. Likewise, the control section 160 of the management server 150 has acquired sensor data regarding an object in the second range R2 from the first ranging sensor 50 and the second ranging sensor 51 (Step S21 in Fig. 11).

The control section 160 detects whether or not the pallet 111, that is, an item, is accommodated in each accommodating space 123 of the rack 120 in the second range R2 on the basis of the acquired sensor data (Step S22 in Fig. 11). The inventory management section 162 of the control section 160 acquires inventory information regarding items in the warehouse system 100 on the basis of the acquired sensor data (Step S23 in Fig. 11). Specifically, inventory information regarding which accommodating space 123 of the rack 120 accommodates or does not accommodate the pallet 111 is acquired. Such inventory information is usable for inventory management and inventory prediction of items, subsequent work planning, stocktaking of items, and the like. It is thus possible to utilize the sensor data not used for performing the task. It should be noted that for example, the sensor data regarding the pallet 111 on the rack 120 may be invalidated after the elapse of a predetermined period of time. The predetermined period of time includes, for example, a predetermined period of time (for example, 24 hours) after acquisition of the sensor data regarding the pallet 111 at the accommodating location in the rack 120 stops.

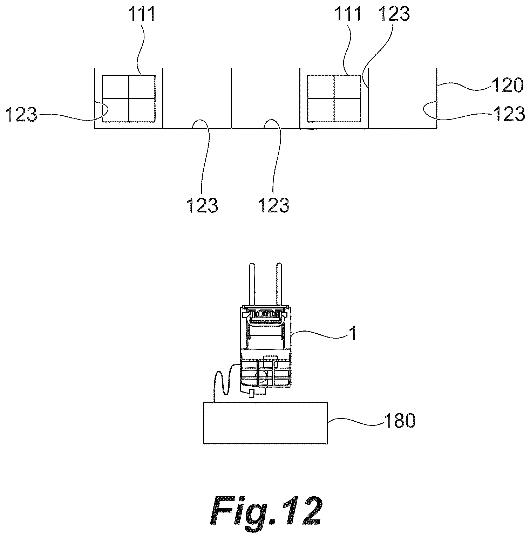

Fig. 12 is a diagram for explaining a modification example of Use Case 3 of sensor data. In this modification example, the forklift 1 is stopped at a charging station 180. In this state, the forklift 1 is electrically connected to the charging station 180 to be charged. At this time, the forklift 1 acquires sensor data regarding an object from the first ranging sensor 50 and the second ranging sensor 51 as described above. Basically, it is not necessary to cause the first ranging sensor 50 and the second ranging sensor 51 to acquire sensor data charging at the charging station 180. However, in this modification example, it is possible to acquire inventory information by utilizing the sensor data not used for performing a task. In this case, the sensor data in both the first range R1 and the second range R2 of the first ranging sensor 50 and the second ranging sensor 51 corresponds to the sensor data not used for performing a task. The sensor data is thus efficiently usable.

### 6. 4 Other Warehouse System

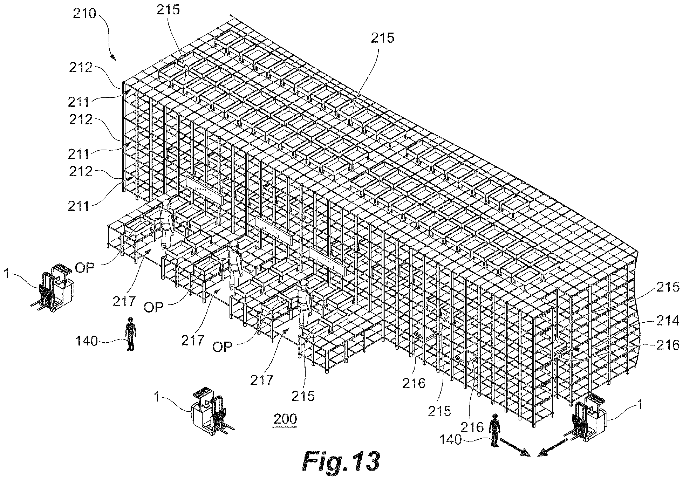

Fig. 13 is a perspective view schematically illustrating a warehouse system 200 according to another embodiment. The warehouse system 200 includes a rack 210 located on, for example, a floor surface. The rack 210 includes a plurality of floors 211 stacked in, for example, a vertical direction and a plurality of support columns 212 supporting the plurality of respective floors 211. The rack 210 includes one or more transport elevators 214 occupying one section of the floors 211. The transport elevator 214 is movable between the floors 211. One or more storage bins 215 for storing items are placed at random on the floors 211 of the rack 210. An accommodating space of the storage bin 215 accommodates one or more types of items.

The warehouse system 200 includes one or more mobile bodies, that is, transport robots 216, for transporting the storage bin 215. The transport robot 216 is a transport robot that is able to autonomously travel within the rack 210. The transport robot 216 is able to move below the storage bin 215 and travel on the floors 211 with the storage bin 215 lifted on an upper surface from a surface of the floor 211. Moreover, the transport robot 216 is able to get on the transport elevator 214. The transport robot 216 is incorporated with one or more sensors (not illustrated) similar to the first ranging sensor 50 and the second ranging sensor 51 of the above-described forklift 1. The sensor is, by way of example, a 3D LiDAR (optical detection and ranging) that is able to detect the presence/absence and/or shape of an object within a predetermined three-dimensional detection range. Note that the sensor may be, for example, a camera that is able to capture an image.

One or more picking stations 217 for sorting items stored in the storage bin 215 are formed at a portion of the rack 210. At the picking station 217, an operator OP performs picking to take a desired item out of the storage bin 215 and put it into a shipping bin 215 for accommodating an item for shipping. Moreover, a space is secured around the rack 210, and, for example, the above-described forklift 1 or the worker 140 is allowed to travel or walk in the space. Such a warehouse system 200 may be formed in the same space as the above-described warehouse system 100 or may be formed in a different space from the warehouse system 100. Moreover, the warehouse system 200 is incorporated with a management server similar to the management server 150 of the warehouse system 100.

Description will be made as, for example, Use Case 2 described above, on a case where a movement path of a moving object is to be understood on the basis of sensor data acquired while the transport robot 216 is in operation in such a warehouse system 200. In this example, a sensor of the transport robot 216 is used for detection of, for example, an obstacle on a movement path of the transport robot 216. The sensor of the transport robot 216 detects an object moving in an outer space from the rack 210 while the transport robot 216 is moving or waiting on an outermost path in the rack 210. In this example, the worker 140 and the forklift 1 that are approaching each other with a corner of the rack 210 in between are detected from the acquired sensor data (see arrows in Fig. 13). At this time, future movement paths of the worker 140 and the forklift 1 are predicted. On the basis of the prediction, for example, instructions requiring that the movement path of the forklift 1 be changed may be outputted to the forklift 1. In this manner, it is possible to avoid a collision between the worker 140 and the forklift 1. This ensures safe operations of manned or autonomous forklifts in the warehouse 200 based on unused sensor data.

Moreover, as another modification example of Use Case 2, the existence of the operator OP at the picking station 217 may be detected on the basis of, for example, sensor data acquired from the transport robot 216 having reached the picking station 217. In this example, although a future movement path of the moving operator OP is not predicted on the basis of the sensor data, a control may be performed to reduce the speed of the forklift 1 traveling near the picking station 217 in a case where the operator OP working at the picking station 217 exists. Even if the operator OP leaves the picking station 217, it is possible to avoid a collision between the operator OP and the forklift 1. It should be noted that the sensor data may be acquired from a fixed sensor provided in, for example, the picking station 217 in place of the sensor of the transport robot 216.

### 6.5 Other Examples

Although the above-described embodiments are explained by taking the forklift 1 as an example of the autonomous mobile robot hereinabove, the autonomous mobile robot may be applied to a variety of robots in addition to the forklift 1. Moreover, in a case where determining, on the basis of the sensor data outputted from the forklift 1, that, for example, the worker 140, the manned forklift 141, another transport robot 142, or the like still exists (for example, remains) in the same place for a period of time longer than a predetermined threshold time, the management server 150 may determine that some error occurs in the worker 140, the manned forklift 141, or the other transport robot 142. For example, the worker 140 may be determined to have a problem with the health condition. Moreover, the manned forklift 141 or the other transport robot 142 may be determined to have a problem with the operating state (for example, a malfunction occurs).

Moreover, for example, in a case where the human worker 140, the manned forklift 141, another transport robot 142, or the like moves at a speed exceeding a predetermined threshold speed, the management server 150 may issue a notification prompting speed reduction to the worker 140, the manned forklift 141, the other transport robot 142, or the like by announcement, notification or the like. Specifically, for the manned forklift 141 or the like not communicably connected to the management server 150, the notification may be directly issued by announcement or the like. Moreover, Use Cases 1 to 3 described above may be combined, if necessary. For example, inventory information regarding the item in the cardboard box 110 on the pallet 111 that is being transported by the forklift 1 may be understood while the future movement path of another forklift 1 is predicted as in Use Case 2.

The same reference numeral is used to refer to the same or similar components throughout all the drawings. The following embodiments are not intended to limit the invention as set forth in the claims. Although the features of the present invention are described herein, modifications and alterations may be made without departing from the spirit and scope of the disclosed embodiments. Furthermore, specific features, structures, or characteristics may be combined in any suitable manner in one or more embodiments. The following detailed description is to be considered merely as exemplary, and the true scope and spirit are intended to be indicated by the claims.

In certain embodiments, the disclosed system provides a technical improvement in the field of warehouse automation by enabling the utilization of unused or otherwise disregarded sensor data generated by automated vehicles, such as forklifts. Conventional systems typically discard or ignore such extraneous sensor information, thereby failing to exploit valuable contextual data available in the operational environment. In contrast, the embodiments described herein employ a non-generic and technically integrated approach in which the unused sensor data is analyzed, correlated, and repurposed within a collaborative control architecture to facilitate real-time coordination, task planning, proactive navigation, etc. among multiple robotic agents operating in a shared workspace.

In certain embodiments, the system leverages advanced robotics algorithms-including, but not limited to, real-time localization and mapping, dynamic path planning, adaptive motion control, and sensor-driven obstacle avoidance-to process and utilize unused sensor data generated by automated warehouse vehicles. These techniques, which may incorporate elements of simultaneous localization and mapping (SLAM), deep-learning-based perception, predictive scheduling, and collaborative navigation, are integrated into the control infrastructure of the warehouse automation system. As a result, the system achieves tangible improvements in coordinated task execution, obstacle detection, and resource efficiency, going beyond merely conventional data processing or organization methods to yield specific technical enhancements in warehouse robotics functionality. This technical configuration advances the performance and reliability of networked autonomous systems beyond mere abstract data processing or organizational workflow management.

The present teachings may also be defined by the following numbered clauses:
1. A method of using sensor data in a warehouse system, the method being executable by a computer, the method comprising:
   acquiring sensor data while a mobile body is in operation, the mobile body including a sensor that is able to detect an object within a detection range, the sensor data regarding the object detected by the sensor;
   detecting the object in, within the detection range, a second range other than a first range on a basis of the sensor data, the first range being used to perform a task of the mobile body; and
   determining a future task of the mobile body on the basis of the sensor data regarding the object detected in the second range.
2. The method according to clause 1, wherein the object detected in the second range includes a transported object placed at a specified location in the warehouse system.
3. The method according to clause 2, wherein the future task includes a task in which the mobile body transports the transported object to a destination location.
4. The method according to clause 2, wherein the specified location includes a location on a rack, a location on a conveyor, or a location in a temporary storage area.
5. The method according to clause 1, wherein the future task includes a task of the mobile body different from the mobile body from which the sensor data is outputted.
6. The method according to clause 5, wherein a future task of the different mobile body is determined before the future task of the mobile body is completed.
7. The method according to clause 1, wherein the sensor data is invalidated after an elapse of a predetermined period of time since the sensor data is acquired.
8. A method of using sensor data in a warehouse system, the method being executable by a computer, the method comprising:
   acquiring sensor data while a mobile body is in operation, the mobile body including a sensor that is able to detect an object within a detection range, the sensor data regarding the object detected by the sensor;
   detecting the object in, within the detection range, a second range other than a first range on a basis of the sensor data, the first range being used to perform a task of the mobile body; and
   understanding a movement path of the object that is moving on the basis of the sensor data regarding the object detected in the second range.
9. A method according to clause 8, wherein the understood movement path of the object is utilized to determine a movement path of the mobile body different from the mobile body from which the sensor data is outputted.
10. The method according to clause 7, wherein the object that is moving includes a mobile body not communicably connected to the warehouse system.
11. The method according to clause 9, wherein the object that is moving includes a human.
12. The method according to clause 7, further comprising predicting, on a basis of a movement speed of the object that is moving, a future movement path of the object.
13. The method according to clause 8, wherein the acquiring of the sensor data is performed while the mobile body is being charged.
14. The method according to clause 1, wherein the sensor data is invalidated after an elapse of a predetermined period of time since the sensor data is acquired.
15. A method of using sensor data in a warehouse system, the method being executable by a computer, the method comprising:
   acquiring sensor data while a mobile body is in operation, the mobile body including a sensor that is able to detect an object within a detection range, the sensor data regarding the object detected by the sensor;
   detecting the object in, within the detection range, a second range other than a first range on a basis of the sensor data, the first range being used to perform a task of the mobile body; and
   acquiring inventory information in the warehouse system on the basis of the sensor data regarding the object detected in the second range.
16. The method according to clause 15, wherein the object detected in the second range includes an item placed on a rack, a conveyor, or a temporary storage area.
17. The method according to clause 15, wherein the object detected in the second range includes another mobile body that is transporting an item, the other mobile body being different from the mobile body from which the sensor data is outputted.
18. The method according to clause 15, wherein the sensor data is invalidated after an elapse of a predetermined period of time since the sensor data is acquired.
19. A warehouse system configured to execute the method according to any one of clauses 1 to 18.
20. A computer-readable non-transitory storage medium comprising a command configured to cause the method according to any one of clauses 1 to 18 to be executed when executed by a computer.

## Claims

1. A method of using sensor data in a warehouse system, the method being executable by a computer, the method comprising:
acquiring sensor data while a mobile body is in operation, the mobile body including a sensor that is able to detect an object within a detection range, the sensor data regarding the object detected by the sensor;
detecting the object in, within the detection range, a second range other than a first range on a basis of the sensor data, the first range being used to perform a task of the mobile body; and
determining a future task of the mobile body on the basis of the sensor data regarding the object detected in the second range.

2. The method according to claim 1, wherein the object detected in the second range includes a transported object placed at a specified location in the warehouse system.

3. The method according to claim 2, wherein the future task includes a task in which the mobile body transports the transported object to a destination location.

4. The method according to claim 2, wherein the specified location includes a location on a rack, a location on a conveyor, or a location in a temporary storage area.

5. The method according to claim 1, wherein the future task includes a task of the mobile body different from the mobile body from which the sensor data is outputted.

6. The method according to claim 5, wherein a future task of the different mobile body is determined before the future task of the mobile body is completed.

7. The method according to claim 1, wherein the sensor data is invalidated after an elapse of a predetermined period of time since the sensor data is acquired.

8. The method according to any one of claims 1 to 7, wherein the object that is moving includes a mobile body not communicably connected to the warehouse system.

9. The method according to claim 8, wherein the object that is moving includes a human.

10. The method according to claim 8 or 9, further comprising predicting, on a basis of a movement speed of the object that is moving, a future movement path of the object.

11. The method according to any one of claims 1 to 10, wherein the acquiring of the sensor data is performed while the mobile body is being charged.

12. The method of any one of claims 1 to 11, wherein the first range corresponds to a range used to perform a current picking, dropping, or transporting motion, and the second range corresponds to other regions within the detection range.

13. The method of any one of claims 1 to 12, further comprising acquiring inventory information in the warehouse system on the basis of the sensor data regarding the object detected in the second range, and wherein the determining of the future task is performed in consideration of the acquired inventory information.

14. A warehouse system configured to execute the method according to any one of claims 1 to 13.

15. A computer-readable non-transitory storage medium comprising a command configured to cause the method according to any one of claims 1 to 13 to be executed when executed by a computer.

## Amended claims

### Amended claims in accordance with Rule 137(2) EPC.

1. A method of using sensor data in a warehouse system, the method being executable by a computer, the method comprising:
acquiring sensor data while a mobile body is in operation, the mobile body including a sensor, fixed with respect to the mobile body, that is able to detect an object within a fixed detection range, the sensor data regarding the object detected by the sensor;
detecting the object in, within the fixed detection range, a second range other than a first range on a basis of the sensor data, the first range being used to perform a current task of the mobile body; and
determining a future task of the mobile body on the basis of the sensor data regarding the object detected in the second range.

2. The method according to claim 1, wherein the object detected in the second range includes a transported object placed at a specified location in the warehouse system.

3. The method according to claim 2, wherein the future task includes a task in which the mobile body transports the transported object to a destination location.

4. The method according to claim 2, wherein the specified location includes a location on a rack, a location on a conveyor, or a location in a temporary storage area.

5. The method according to claim 1, wherein the future task includes a task of the mobile body different from the mobile body from which the sensor data is outputted.

6. The method according to claim 5, wherein a future task of the different mobile body is determined before the future task of the mobile body is completed.

7. The method according to claim 1, wherein the sensor data is invalidated after an elapse of a predetermined period of time since the sensor data is acquired.

8. The method according to any one of claims 1 to 7, wherein the object that is moving includes a mobile body not communicably connected to the warehouse system.

9. The method according to claim 8, wherein the object that is moving includes a human.

10. The method according to claim 8 or 9, further comprising predicting, on a basis of a movement speed of the object that is moving, a future movement path of the object.

11. The method according to any one of claims 1 to 10, wherein the acquiring of the sensor data is performed while the mobile body is being charged.

12. The method of any one of claims 1 to 11, wherein the first range corresponds to a range used to perform a current picking, dropping, or transporting motion, and the second range corresponds to other regions within the fixed detection range.

13. The method of any one of claims 1 to 12, further comprising acquiring inventory information in the warehouse system on the basis of the sensor data regarding the object detected in the second range, and wherein the determining of the future task is performed in consideration of the acquired inventory information.

14. A warehouse system configured to execute the method according to any one of claims 1 to 13.

15. A computer-readable non-transitory storage medium comprising a command configured to cause the method according to any one of claims 1 to 13 to be executed when executed by a computer.
